# DEMANDE DE BREVET EUROPEEN

(11) **EP 4 012 223 A1**
(43) Date de publication de la demande: **15.06.2022**
(21) Numéro de dépôt: 21209591.3
(22) Date de dépôt: 22.11.2021
(51) Int. Cl.: F16H 7/08

(54) **TENDEUR DE COURROIE THERMOSTATE POUR DÉMARRAGE A FROID**

(30) Priorité: 10.12.2020 FR 2013014
(71) Demandeur: Renault s.a.s, 92100 Boulogne Billancourt (FR)
(72) Inventeur: CHOUISNARD, Yann, 78084 GUYANCOURT (FR); MILLON, Jean-Pierre, 78084 GUYANCOURT (FR)
(74) Mandataire: Renault Group

(57) **Abrégé**

Dispositif (10) de mise en tension d'une courroie de transmission entourant une roue menante d'un vilebrequin d'un moteur thermique, et une roue d'actionnement d'un alterno-démarreur (20), lesdites roues étant coplanaires, le dispositif comprenant une poulie d'extrémité (11) roulant en appui sur la courroie et un système de poussée de l'axe de ladite poulie contre la courroie, qui comprend deux éléments élastiques (15) disposés en série, séparés par une paroi médiane et aptes à se déformer dans une chambre limitée par deux parois d'extrémité (17), en appui sur une paroi de butée et poussant une paroi mobile,

Caractérisé en ce que ledit dispositif comprend un moyen déformable (40) en fonction de la température et connecté à ladite poulie, tendant à modifier à modifier le parcours de la courroie selon la température.

## Description

### Domaine technique de l'invention

La présente invention concerne un moteur à combustion interne.

La présente invention concerne un dispositif d'entrainement d'un alterno-démarreur accouplé à un moteur thermique par une courroie de transmission.

La présente invention concerne plus particulièrement un dispositif de réglage de la courroie de transmission entrainant l'alterno-démarreur accouplé à un moteur thermique de véhicule automobile selon des conditions de température.

### Etat de la technique

Un groupe moto-propulseur d'un véhicule automobile avec un moteur thermique comprend un dispositif de démarrage avec lequel il coopère grâce à un système de transmission comportant une courroie de transmission. Ledit dispositif de démarrage comprend un démarreur qui permet de lancer le moteur avec l'aide de la batterie et d'un alternateur, ou d'un alterno-démarreur qui fait office de démarreur et d'alternateur en une seule pièce.

Le rôle du démarreur est d'entraîner le moteur du véhicule lors de l'allumage, de ce fait il est un grand consommateur beaucoup d'énergie. De plus, il reste accouplé avec le moteur thermique en permanence, notamment pendant les phases d'accélérations pendant lesquelles sa consommation d'énergie influe fortement sur les performances du moteur thermique.

L'alterno-démarreur regroupe les fonctions d'alternateur et de démarreur dans un seul élément. Il peut agir comme générateur et comme récepteur d'énergie électrique.

L'alterno-démarreur fait office de moteur électrique et assiste le moteur thermique pendant les phases d'accélération. Il utilise pour cela l'énergie électrique générée lors des phases de freinage et de décélération. La consommation peut ainsi être diminuée.

L'alterno-démarreur peut faciliter la mise en place d'une fonction d'arrêt et démarrage automatique, qui coupe automatiquement le moteur dès que le véhicule est immobilisé et le redémarre lorsque le conducteur débraye ou relâche le frein.

Ladite courroie de transmission entoure une roue fixée solidaire à une extrémité de distribution d'un vilebrequin et un pignon fixé solidaire d'un axe de l'alterno-démarreur. Il est entendu que ladite roue et ledit pignon sont coplanaires.

Du fait des fonctions de l'alterno-démarreur et de son impact sur le fonctionnement du moteur thermique, il est important de maitriser les rotations de l'alterno-démarreur par rapport à celles du vilebrequin du moteur thermique, notamment les glissements de rotation entre les deux éléments et la courroie de transmission qui peuvent diminuer l'efficacité globale du moteur thermique.

La publication FR1657632-A1 propose un groupe moto-propulseur de véhicule automobile comprenant un moteur thermique accouplé avec un alterno-démarreur grâce à une courroie de transmission. L'alterno-démarreur-générateur est apte à générer un couple de précontrainte appliqué au vilebrequin du moteur thermique dans le sens oppose au sens de rotation du vilebrequin et inférieur au couple de lancement du vilebrequin afin d'avoir une modulation du couple pour que le démarrage du moteur soit aussi silencieux et sans vibration autant que possible.

Cependant, par temps froids, les démarrages des moteurs peuvent poser des problèmes à cause de la formation de givre ou de glace déposée sur la courroie de transmission.

Selon la température négative pouvant être inférieure à -10°C, la glace formée sur la courroie peut entrainer des glissements entre ladite courroie et le pignon de l'alterno-démarreur provoquant des pertes de transmission transitoire avec des risques de vibration entrainant des détériorations de ladite courroie.

De plus, lorsque la glace est éliminée de la surface de la courroie, on peut également avoir un accouplement de la courroie avec le pignon de l'alterno-démarreur très voire trop rapide, ce qui entrainer également des détériorations de la courroie.

On peut également citer le problème d'un couple résistif du moteur thermique au démarrage par temps froids qui nécessite une prétension de la courroie autour du pignon.

Pour répondre à ces problèmes, on peut avoir deux solutions qui sont :
- une augmentation du diamètre du pignon pour augmenter le couple de l'alterno-démarreur,
- une augmentation de la prétension de la courroie qui entraine une augmentation du frottement ainsi qu'une usure prématurée de la courroie.

Le but de l'invention est de remédier à ces problèmes et un des objets de l'invention est un dispositif de mise en tension d'une courroie de transmission entourant une roue d'entrainement d'un vilebrequin d'un moteur thermique, et un pignon d'actionnement d'un alterno-démarreur, ladit roue et ledit pignon étant coplanaires, ledit dispositif étant apte modifier de façon simple la tension de la courroie à l'atteinte d'un seuil de température basse.

### Présentation de l'invention

La présente invention concerne plus particulièrement un dispositif de mise en tension d'une courroie de transmission entourant une roue d'entrainement d'un vilebrequin d'un moteur thermique, et un pignon d'actionnement d'un alterno-démarreur, ladite roue et ledit pignon étant coplanaires, le dispositif comprenant une poulie roulant en appui sur la courroie et un système de poussée de l'axe de ladite poulie contre la courroie, qui comprend deux éléments élastiques disposés en série, séparés par une paroi médiane et aptes à se déformer dans une chambre limitée par deux parois d'extrémité, en appui sur une paroi de butée et poussant une paroi mobile,

Caractérisé en ce que ledit dispositif comprend un moyen déformable en fonction de la température et connecté à ladite poulie, tendant à modifier la tension sur la courroie selon la température.

De manière avantageuse, le dispositif comprend un moyen déformable connecté à la poulie roulant sur la courroie et apte à se déformer en fonction de la température pour modifier la tension sur ladite courroie afin de pallier les problèmes liés à la glace au démarrage par temps froids.

En effet, le moyen déformable en fonction de la température permet d'accroitre la tension sur la courroie de transmission selon la température pour permettre d'enlever rapidement la glace ou le givre formé sur la courroie par temps froids.

Selon d'autres caractéristiques de l'invention :
- le moyen extensible en fonction de la température est formé par l'une des parois d'extrémité.

De manière avantageuse, le moyen déformable en fonction de la température est formé par la paroi d'appui ou par la paroi mobile afin de modifier de manière simple la poussée sur la poulie roulant sur la courroie. En effet, le moyen déformable peut associer sa déformation à la poussée des éléments élastiques et accroitre les efforts desdits éléments sur la courroie, notamment par temps froids et au démarrage du moteur.
- le moyen extensible est formé par la paroi médiane séparant les éléments élastiques.

De manière avantageuse, la paroi médiane séparant les deux éléments élastiques peut être déformable en fonction de la température et ainsi générer une force d'appui sur les deux éléments élastiques qui se répercute sur la courroie de transmission.
- le moyen extensible thermiquement est fixé directement à l'axe de la poulie roulant sur la courroie.

De manière avantageuse, le moyen déformable est fixé directement à l'axe de la poulie pour avoir une action plus efficace.
- le dispositif comprend deux poulies roulant sur la courroie et tenues à l'extrémité d'un arceau ouvert et l'élément déformable est apte à modifier l'écartement entre les axes des deux poulies en fonction de la température.

De manière avantageuse, le dispositif de mise en tension de la courroie comprend deux poulies roulant sur la courroie de transmission et tenues à l'extrémité d'un arceau, notamment métallique, avec l'élément déformable est apte à modifier l'écartement entre les axes des deux poulies par temps froids pour générer une tension supplémentaire sur la courroie par temps froids.
- l'élément déformable est logé dans l'arceau tenant les poulies.

De manière avantageuse, l'élément déformable est logé dans l'arceau tenant les deux poulies pour améliorer la compacité du dispositif de mise en tension de la courroie.
- l'élément élastique est connecté de façon directe à l'axe des deux poulies.

De manière avantageuse, le moyen déformable est fixé directement à l'axe des deux poulies et permet de moduler directement l'écartement entre les deux axes en fonction de la température et donc la tension de la courroie de transmission qui passe par les deux poulies.
- l'élément déformable est à mémoire de forme en fonction de la température.

De manière avantageuse, l'élément déformable est à mémoire de forme et peut se déformer en dessous d'un seuil de température.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique d'un dispositif de mise en tension de courroie de transmission de moteur thermique de véhicule automobile.
[Fig. 2] est une vue schématique de coupe du dispositif de mise en tension de courroie avec un élément déformable.
[Fig. 3] est une vue schématique de coupe du dispositif de mise en tension de courroie avec un élément déformable.
[Fig. 4] est une vue schématique du dispositif de mise en tension avec un élément déformable thermiquement.
[Fig. 5] est une vue schématique de coupe d'un élément déformable thermiquement.

### Description détaillée des figures

Dans la description qui va suivre, des chiffres de référence identiques désignent des pièces identiques ou ayant des fonctions similaires.

Dans la description qui suit, on propose un dispositif de mise en tension de courroie de transmission qui comprend deux poulies par lesquelles passe ladite courroie, cependant l'invention ne se réduit pas à ce type de dispositif mais peut concerner d'autres dispositifs de mise en tension de courroie de transmission de moteur thermique pour un véhicule automobile, qui comprend une poulie roulant sur la courroie.

Généralement, un moteur thermique ou à combustion interne comprend un vilebrequin mobile en rotation autour d'un axe longitudinal du moteur et qui entraine des accessoires grâce à une courroie de transmission entourant une roue fixée solidaire à une extrémité du vilebrequin débouchant d'une face dite de distribution du moteur. Ladite courroie entoure également des pignons de différents accessoires du moteur tels que le pignon d'une pompe à eau ou à vide.

L'accessoire selon notre invention est un alterno-démarreur qui fait office d'alternateur et de démarreur en une seule pièce.

Il a donc deux rôles :
- un rôle de récepteur d'énergie en tant qu'alternateur,
- un rôle générateur en tant que démarreur.

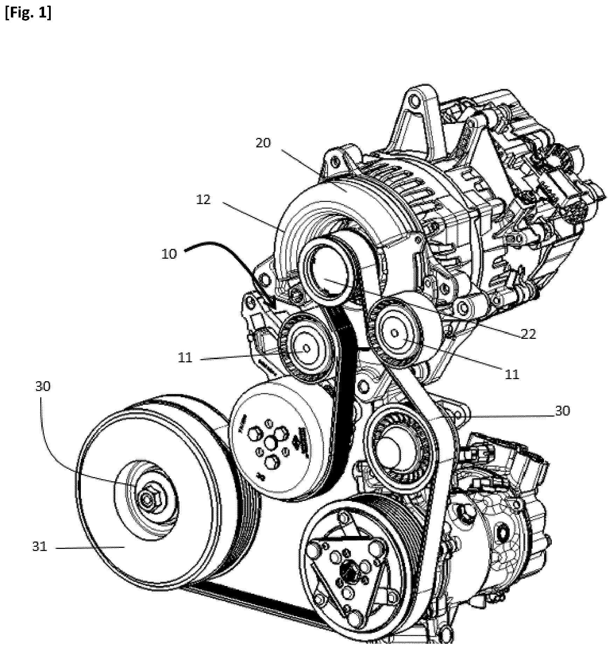

La figure 1 représente une face de distribution 100 d'un moteur thermique (non représenté). De cette face débouchent une extrémité 31 d'un vilebrequin (non représenté) portant une roue menante 32 et une extrémité 21 d'un alterno-démarreur 20 qui porte une roue d'actionnement 22 dudit alterno-démarreur. Les deux roues 31, 22 sont coplanaires et entourées par une courroie de transmission 30. Un dispositif 10 de mise en tension de l'alterno-démarreur est fixé sur le carter 31 de l'alterno-démarreur 20.

Le dispositif 10 de mise en tension est formé par deux poulies 11 tenues aux deux extrémités d'un arceau 12 métallique ouvert, chacune des deux poulies d'extrémité roulant sur la courroie de transmission 30.

L'arceau métallique 12 présente trois oreilles 33 de fixation comprenant chacune un orifice traversant pour le passage de vis de fixation qui sont enfoncées dans le carter de l'alterno-démarreur notamment du côté de la face de distribution dudit moteur. Le dispositif de mise en tension de la courroie est donc fixé solidaire de l'alterno-démarreur solidaire du moteur.

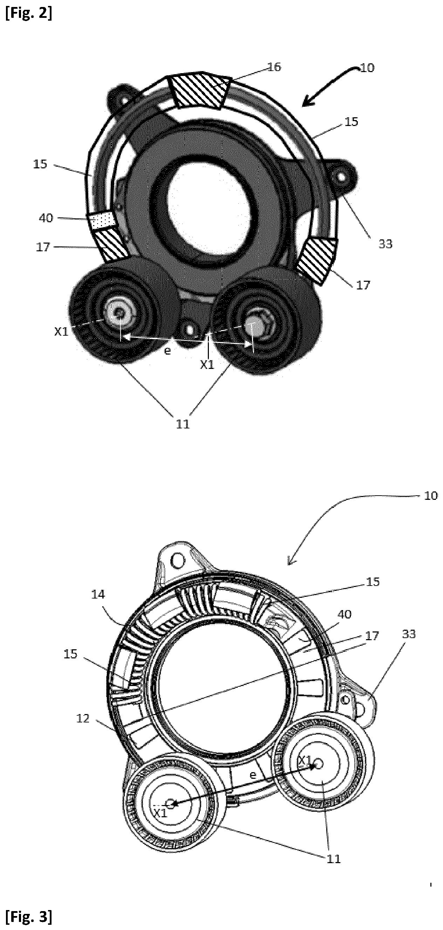

Selon les figures 2 et 3, la courroie passe ainsi par la première poulie d'extrémité 11, enroule la roue d'actionnement 22 de l'alterno-démarreur 20 et passe par la seconde poulie d'extrémité 11. Elle parcourt un chemin au travers du dispositif de mise en tension déterminé par les dispositions des poulies d'extrémité 11. Les poulies 11 sont mobiles en rotation autour de leur de rotation X1. Le rapprochement desdites poulies d'extrémité 11, notamment la réduction de l'écartement e entre les axes X1, allonge sensiblement le parcours de la courroie 30 au travers du dispositif et entraine donc une tension supplémentaire à la courroie.

L'écartement variable e entre les axes X1 des deux poulies d'extrémité 11 génère une tension plus ou moins importante sur la courroie 30.

L'arceau métallique 12 délimite une chambre d'actionnement 14 dans laquelle sont logés deux éléments élastiques 15 séparés par une paroi médiane 16. Les éléments élastiques 15 sont des ressorts hélicoïdaux dont l'axe est courbe et suit la courbure de l'arceau 12. Les deux ressorts sont disposés en série l'un de l'autre.

Chacun desdits éléments élastiques 15 est ainsi apte à être comprimé ou détendu entre la paroi médiane 16 et une paroi d'extrémité 17 qui peut être une paroi de butée ou une paroi mobile connectée à l'une des deux poulies d'extrémité 11.

La compression/détente des éléments élastiques 15 entraine une modification de l'écartement e entre les axes X1 des poulies d'extrémité 11 pour générer une tension sur la courroie en vue d'un rattrapage de jeu de la courroie selon le rôle de générateur/récepteur de l'alterno-démarreur.

L'invention propose un moyen susceptible de générer une prétension selon un niveau de température négative de la courroie de transmission pour préparer le démarrage du moteur en éliminant une pellicule de glace ou de givre déposée sur ladite courroie. Ledit moyen est connecté directement ou indirectement par l'intermédiaire de parois ou de moyens de fixation à la poulie roulant sur la courroie.

Selon l'invention, le dispositif 10 de mise en tension comprend un moyen déformable 40 selon la température apte à générer une tension supplémentaire sur la courroie suivant un niveau de température négative inférieure par exemple à -10°C.

Ledit moyen déformable 40 peut être à mémoire de forme et s'étendre ou rétrécir selon les modes de réalisation pour générer un effort tendant à modifier le chemin suivi par la courroie 30 au passage au travers du dispositif 10, et ainsi entrainer une tension supplémentaire de la courroie.

Selon un mode de réalisation de l'invention représenté en figure 2, ledit moyen 40 est apte à modifier l'écartement e entre les axes X1 des deux poulies d'extrémité 11.

Ledit moyen 40 est installé dans la chambre d'actionnement 14 de préférence à la suite ou en série des éléments élastiques 15.

Selon un mode de réalisation, le moyen déformable 40 est inséré dans une des parois d'extrémité 17, soit la paroi d'appui, soit la paroi mobile opposée. La déformation de l'une des deux parois 17 est susceptible d'exercer un effort radial sur les extrémités 12e de l'arceau 12 et donc de modifier l'écartement e des axes X1 des poulies 11. Ledit écartement modifie le chemin suivi par la courroie au passage au travers dudit dispositif, notamment allonge ledit chemin pour entrainer une prétension supplémentaire de ladite courroie.

Selon un autre mode de réalisation, ledit moyen déformable 40 peut être intercalé radialement entre l'une des parois d'extrémité 17 et un des deux éléments élastiques 15 ou entre l'une des parois d'extrémité 17 et l'axe X1 d'une des deux poulies d'extrémité 11.

Le moyen déformable 40 coopère avec les parois d'extrémité 11 pour générer une tension supplémentaire sur la courroie à l'atteinte d'un seuil de température négative.

Selon un autre mode de réalisation, le moyen déformable peut être inséré au niveau de la paroi médiane 16 séparant les deux éléments élastiques 15. De cette façon l'épaisseur de l'ensemble formé par la paroi médiane 16 et le moyen déformable 40 est susceptible d'augmenter pour générer un effort sur les extrémités 12e de l'arceau et entrainer une modification de l'écartement e entre les axes des deux poulies d'extrémités 11. La modification de l'écartement e entraine une modification du parcours de la courroie 30 au travers du dispositif 10 et donc une prétension supplémentaire de la courroie d'entrainement.

Le moyen déformable 40 coopère avec la paroi médiane 16 pour générer une tension supplémentaire sur la courroie à l'atteinte d'un seuil de température négative.

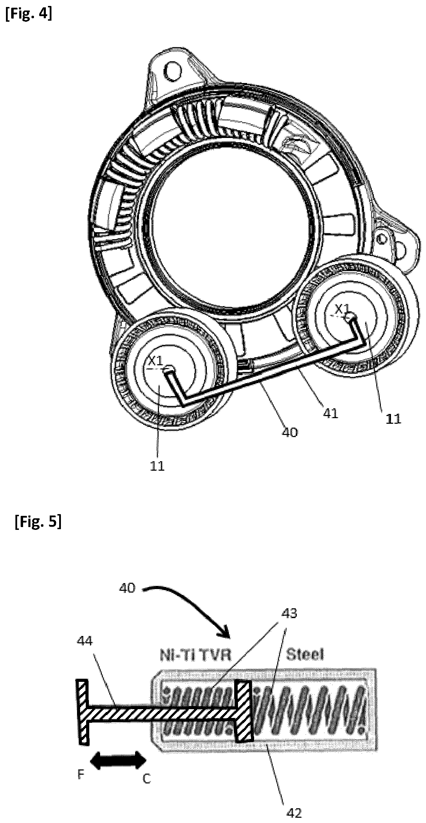

Selon un autre mode de réalisation, le moyen déformable 40 du dispositif de mise en tension de la courroie relie directement les deux axes X1 des poulies d'extrémité comme représenté dans la figure 4. Ledit dispositif peut être un bras déformable 41, rétractable ou extensible, en fonction de la température notamment les basses températures inférieures à -10°C, pour modifier l'écartement entre les deux axes des poulies et donc le parcours de la courroie au travers du dispositif.

Le moyen déformable peut être une plaque à mémoire de forme apte à se déformer selon une direction donnée à l'atteinte d'un seuil de température.

Ledit moyen 40 peut être à titre d'exemple représenté en figure 5, formé par un tube 42 logeant deux ressorts hélicoïdaux 43 séparés par un piston 44 traversant ledit tube selon l'axe X2 du tube. Les ressorts sont choisis pour se détendre/comprimer différemment en fonction de la température pour entrainer un déplacement du piston 44 à l'atteinte d'un seuil de température, ici négative. Le piston est alors susceptible de se déplacer selon l'axe du tube X2 dans la direction d'allongement du moyen déformable 40 en fonction de la température.

L'objectif est atteint : Le moyen déformable en fonction de la température permet de modifier le parcours de la courroie au travers dudit dispositif, notamment en allongeant ledit parcours à l'atteinte d'un seuil de température basse voire très basse, et donc générer une prétension supplémentaire de la courroie.

Comme il va de soi, l'invention ne se limite pas aux seules formes d'exécution de cette prise, décrites ci-dessus à titre d'exemples, elle en embrasse au contraire toutes les variantes.

Selon un autre mode de réalisation non représenté, le bras formant le moyen déformable 40 peut présenter une première extrémité fixée solidaire de l'axe d'une poulie d'extrémité et une seconde extrémité solidaire de la paroi du carter du moteur.

## Revendications

1. Dispositif (10) de mise en tension d'une courroie de transmission (30) entourant une roue menante d'un vilebrequin d'un moteur thermique, et une roue d'actionnement (22) d'un alterno-démarreur (20), lesdites roues étant coplanaires, le dispositif comprenant au moins une poulie (11) roulant en appui sur la courroie et un système de poussée de l'axe de ladite poulie (11) contre la courroie (30), qui comprend deux éléments élastiques (15) disposés en série, séparés par une paroi médiane (16) et aptes à se déformer dans une chambre (14) limitée par deux parois d'extrémité (17), en appui sur une paroi de butée et poussant une paroi mobile, **Caractérisé en ce que** ledit dispositif comprend un moyen déformable (40) en fonction de la température et connecté à ladite poulie (11), dont la déformation génère un déplacement de l'axe (X1) de ladite poulie tendant à modifier le parcours de la courroie selon la température.

2. Dispositif (10) selon la revendication 1, **caractérisé en ce que** le moyen (40) déformable en fonction de la température coopère l'une au-moins des parois d'extrémité (11).

3. Dispositif (10) selon la revendication 1 ou 2, **caractérisé en ce que** le moyen (40) déformable en fonction de la température est formé par l'une au-moins des parois d'extrémité (11).

4. Dispositif (10) selon la revendication 1, **caractérisé en ce que** le moyen extensible (40) est coopère avec la paroi médiane (16) séparant les éléments élastiques (15).

5. Dispositif (10) selon la revendication 1 ou 4, **caractérisé en ce que** le moyen extensible (40) est formé par la paroi médiane (16) séparant les éléments élastiques (15).

6. Dispositif (10) selon la revendication 1, **caractérisé en ce que** le moyen déformable (40) thermiquement est fixé directement à l'axe (X1) de la poulie d'extrémité (11) roulant sur la courroie.

7. Dispositif (10) selon l'une quelconque des revendications 1 à 6, **caractérisé en ce que** le dispositif comprend deux poulies d'extrémité (11) roulant sur la courroie (30) et tenues à l'extrémité d'un arceau (12) ouvert et l'élément déformable (40) est apte à modifier l'écartement (e) entre les axes (X1) des deux poulies d'extrémité (11) en fonction de la température.

8. Dispositif (10) selon la revendication 7, **caractérisé en ce que** l'élément déformable (40) est logé dans l'arceau (12) tenant les poulies d'extrémité (11).

9. Dispositif (10) selon la revendication 7, **caractérisé en ce que** l'élément déformable (40) est connecté de façon directe à l'axe (X1) des deux poulies (11).

10. Dispositif (10) selon l'une quelconque des revendications 1 à 9, **caractérisé en ce que** l'élément déformable (40) est à mémoire de forme en fonction de la température.
